# EUROPÄISCHE PATENTSCHRIFT

(11) **EP 0 464 044 B1**
(45) Veröffentlichungstag und Bekanntmachung des Hinweises auf die Patenterteilung: **13.07.1994**
(21) Anmeldenummer: 90904279.8
(22) Anmeldetag: 13.03.1990
(51) Int. Cl.: C04B 28/14, C04B 38/02

(54) **GIPSSCHAUMSTOFF MIT PORIGER STRUKTUR, VERFAHREN ZU SEINER HERSTELLUNG UND SEINE VERWENDUNG**
CELLULAR GYPSUM WITH PORIFOROUS STRUCTURE, PROCESS FOR THE MANUFACTURE THEREOF AND USE THEREOF
PL TRE ALVEOLAIRE A STRUCTURE POREUSE, SON PROCEDE DE PRODUCTION ET SON UTILISATION

(30) Priorität: 20.03.1989 DE 3909083
(43) Veröffentlichungstag der Anmeldung: 08.01.1992
(73) Patentinhaber: FRAUNHOFER-GESELLSCHAFT ZUR FÖRDERUNG DER ANGEWANDTEN FORSCHUNG E.V., 80636 München (DE)
(72) Erfinder: MEINHARDT, Stefan, D-7410 Reutlingen (DE); ERTEL, Hanno, W-7000 Stuttgart 50 (DE)
(74) Vertreter: Kraus, Walter, Dr.
(86) Internationale Anmeldenummer: EP9000403
(87) Internationale Veröffentlichungsnummer: WO9011259

(56) Entgegenhaltungen:
- EP-A- 0 256 330

## Beschreibung

Die Erfindung betrifft einen Gipsschaumstoff mit poriger Struktur, ein Verfahren zu seiner Herstellung und seine Verwendung.

Schall- und Wärmedämmstoffe spielen im Bauwesen eine bedeutende Rolle. Wärmedämmstoffe reduzieren den Heizenergieverbrauch von Gebäuden und tragen so durch Verringerung der Rauchgasemissionen zum Umweltschutz bei. Schalldämmstoffe werden bei der Lärmbekämpfung, Bau- und Raumakustik eingesetzt.

Als Wärmedämmstoffe werden Matten, Platten oder Formstücke aus porigen bzw. faserigen organischen und anorganischen Stoffen mit niedriger Wärmeleitfähigkeit, wie Kokos-, Holz-, Glas- und Mineralfasern, oder Kork, Gasbeton, Kunststoffschäume verwendet. Als schallabsorbierende Baustoffe werden vorwiegend Absorber aus Mineralfasern oder andere offenporige Schäume eingesetzt, die aus gestalterischen Gründen unter Umständen eine schalldurchlässige Abdeckung erhalten und als nicht selbsttragende Bauteile auf Untergründen befestigt, zwischen Bauteile eingebracht oder in Tragekonstruktionen eingebunden sind.

Damit ein Material schallschluckend (schallabsorbierend) wirken kann, muß es eine poröse Struktur besitzen. Das ist der Fall bei Fasermaterialien (zum Beispiel Glas- oder Steinwolle) oder offenporigen Schäumen. Die Materialzellen sind untereinander verbunden (offenporiger Aufbau), so daß eine Luftdurchströmung erfolgen kann. In einem Absorbermaterial ist infolge der porösen Struktur die Ausbreitung von Schall möglich, wobei durch örtliche Reibungsverluste an den Fasern oder Zellrändern Schallenergie in Wärmeenergie umgewandelt wird.

Mineralfasern benötigen beim Schmelzen der Ausgangsstoffe Glas oder Basalt einen hohen Energieaufwand. Die gezogenen Fasern werden zu den erforderlichen Dichten und Dicken verklebt, die Kleber emittieren noch längere Zeit in die Umgebung. Die Ausgangsstoffe stehen zwar reichlich und kostengünstig zur Verfügung. Bei der Bearbeitung der Fasermatten durch Schneiden oder Schleifen entstehen kurze Faserabschnitte, die sich in der Bekleidung festsetzen und Juckreiz verursachen. Auch in den Atmungsorganen des Menschen treten Störungen auf.

Auch Kunststoffschäume sind ökologisch nicht durchweg unbedenklich, weil zahlreiche Schäume nur mittels Fluorchlorkohlenwasserstoffen (FCKW) geschäumt werden können, diese FCKW's sollen bei dem Abbau der Ozonschicht wesentlich mitbeteiligt sein.

Gips ist im Innenausbau ein bekannter, breit eingeführter Baustoff, der einerseits in natürlichen Vorkommen abgebaut wird, andererseits in den Kraftwerken bei den Rauchgas-Entschwefelungs-Anlagen (REA) in so großen Mengen anfällt, daß alleine durch REA-Gipse der gesamte jährliche Gipsbedarf der Bundesrepublik abgedeckt werden könnte. Bei den anhaltenden Bemühungen um Luftreinhaltung wird sich der Anfall an REA-Gipsen vermehren und zu ernsthaften Entsorgungsschwierigkeiten führen. Aus diesen Gründen besteht ein großes Anliegen, außer den bekannten Anwendungen von Gips bei Putzen, Boden-, Wand- und Deckenplatten neue Gipsprodukte mit erweiterten Eigenschaften auf den Markt zu bringen, hierzu gehören die Gipsschäume.

Zur Herstellung von porigen Gipsbauteilen werden bislang handelsübliche Gipse mit verschiedenen Zutaten, wie zum Beispiel Aluminiumpulver, Magnesiumpulver, durch Erhitzen der Masse auf 300°C bis 800°C hergestellt. Hierbei entstehen geschlossenporige Gipsschäume, die auch als Wärmedämmstoffe angeboten werden. Diese Gipsschäume besitzen den Nachteil, daß ihre Herstellung teuer ist, sie außerdem physiologisch bedenkliche Metalle enthalten und zu ihrer Herstellung viel zusätzliche Energie benötigt wird.

In der US-PS 4 330 589 wird ein geschäumter Gipsartikel beschrieben, welcher eine Vielzahl von isolierten Zellen besitzt, wobei die Zellenwände feine, die Zellen verbindende Kanäle aufweisen. Dieser geschäumte Gipskörper wird durch Schäumen einer Gipsaufschlämmung, welche Wasserstoffperoxid und eine Kobaltverbindung enthält, hergestellt. Die eingesetzten Kobaltverbindungen sind physiologisch bedenklich. Für die Herstellung wird ein zusätzlicher Trocknungsprozeß unter Temperatureinwirkung bei 45°C über 6 Stunden benötigt.

In der EP-0 263 975-A2 wird ein offenzelliger geschäumter Gips, der kohlenstoffhaltiges Material enthält und fluide Materialien absorbiert, beschrieben. Dieses Material ist als Filtermaterial vorgesehen, ein Einsatz für akustische und wärmetechnische Anwendungen ist nicht vorgesehen.

In der DE-38 04 884-A1 wird ein künstlicher Stein, der unter anderem Schaumgips enthält, beschrieben. Dieser Stein eignet sich auch als Wärmedämmstoff. Er besitzt jedoch den Nachteil, daß bei seiner Herstellung ein Brennvorgang im Ofen bei hoher Temperatur erforderlich ist.

In der DE-25 46 181-B2 wird ein Verfahren zur Herstellung von Gipsschaum und von Bauelementen aus Gipsschaum beschrieben. Die dabei erhaltenen Stoffe besitzen eine porige Struktur und gegenüber normalen, nichtgeschäumten Gipsprodukten verbesserte Wärmedämmung. Ihre Dichte liegt im Bereich von 0,45 bis 0,8 g/cm³. Bei diesem bekannten Verfahren müssen verschiedene Zusatzstoffe verwendet werden. Der Zusatz eines Gipsverflüssigers ist nachteilig. Als Gipsverflüssiger wird ein sulfonsäuremodifiziertes Melaminharz eingesetzt, welches relativ teuer ist. Die bei dem bekannten Verfahren verwendete Gips-Wasser-Mischung besitzt eine relativ niedrige Viskosität, und das Produkt ist flüssig. Es besitzt den Nachteil, daß es an Lunkern und freien, offenen Stellen der Formen ausläuft. Die Mischung weist weiterhin eine Startzeit von nur 5 Minuten auf. Diese Zeit ist bei einer manuellen Arbeitsweise relativ kurz und reicht bei der praktischen Durchführung nicht aus.

In der DE-29 40 785-A1 wird ein Schaumgips beschrieben, der wie der Gips der DE-25 46 181-B2 hergestellt wird und zusätzlich noch Polyvinylalkohol und Borsäure enthält. Dieser bekannte Gips besitzt den Nachteil, daß er Borsäure enthält, was physiologisch bedenklich ist, und außerdem treten bei seiner Herstellung die oben im Zusammenhang mit der DE-25 46 181-B2 genannten Nachteile auf.

Die DE-22 50 611-A1 betrifft ein Verfahren zur Herstellung eines leichtgewichtigen, verstärkten Strukturmaterials mit vorteilhaften Druck-, Zug- und Biegezugfestigkeiten für Bauplatten. Diese Materialien sollen auch günstige Schallabsorptionseigenschaften und Wärmeleitfähigkeiten aufweisen. Der im Beispiel 3 angegebene K-Faktor ist den bekannten Wärmeleitfähigkeiten nicht zuzuordnen, weil physikalische Meßeinheiten fehlen. Die im Beispiel 4 angegebene Meßgröße ist unbekannt, eine Zuordnung ist nicht möglich. Werden die Bauplatten zwischen versteifenden Papierabdeckblättern eingelegt, werden die Schallabsorptionseigenschaften deutlich nachteilig beeinflußt.

In der DE-27 16 918-A1 werden Gipsmassen beschrieben, die Gips und Hartschaumstaub enthalten. Aus diesen Gipsmassen werden Putze, Gipskartonplatten, Abdichtungen, Modellier- und Füllmassen hergestellt. Ein Einsatz für akustische und wärmetechnische Anwendungen dieser Produkte ist nicht vorgesehen.

In der Gebrauchsmusteranmeldung DE-83 13 354-U1 werden Verschlußkörper zum Absperren von Hohlräumen in Bergwerken beschrieben, die aufgeschäumten Gips aus Anhydrit mit einer porigen Zellstruktur enthalten. Diese Produkte sind als Wärmedämmstoffe und Schallabsorptionsmaterialien nicht geeignet.

Die EP-A-0 256 330 betrifft ein Verfahren zur Herstellung von verstärkten Gipsplatten aus Gips(-Halbhydrat), gegebenenfalls Bewehrungsstoffen, vorzugsweise Cellulose-Teilchen, wie Sägespäne, unter Zumischung von Polyisocyanaten. Die bei diesem bekannten Verfahren erhaltenen Platten sind als Schalldämmstoffe und Wärmedämmstoffe ungeeignet, da sie keine offenzellige Struktur aufweisen.

Der vorliegenden Erfindung liegt die Aufgabe zugrunde, Schalldämmstoffe und Wärmedämmstoffe zur Verfügung zu stellen, welche eine gute Wärmedämmung oder Schallabsorption zeigen. Weiterhin soll ein Verfahren zur Herstellung der Dämmstoffe zur Verfügung gestellt werden. Bei ihrer Herstellung sollen keine hohen Temperaturen erforderlich sein. Sie sollen ohne hohen Energieaufwand hergestellt werden können. Die Dämmstoffe sollen keine kurzen Faserabschnitte enthalten, die unangenehme Reaktionen, wie Juckreiz oder Atemstörungen, hervorrufen können. Das Material soll preiswert und hygienisch einwandfrei sein.

Erfindungsgemäß soll ein Verfahren zur Verfügung gestellt werden, für das Gips, insbesondere der REA-Gips, als Grundstoff verwendet werden kann.

Gegenstand der Erfindung ist ein Gipsschaumstoff mit poriger Struktur, enthaltend einen aus Polyisocyanaten entstandenen Polyharnstoff und ein Netzmittel, der dadurch gekennzeichnet ist, daß er ein spezifisches Gewicht im Bereich von 0,1 bis 0,4 g/cm³ besitzt, offenzellig ist und als Polyharnstoff das Kondensationsprodukt aus Diphenylmethan-4,4'-diisocyanat-Präpolymeren und Wasser enthält und durch Anfeuchtung von Gips mit Wasser und Umsetzung des Gipsbreis mit Diphenylmethan-4,4'-diisocyanat-Präpolymeren in Anwesenheit eines Netzmittels hergestellt worden ist.

Gegenstand der Erfindung ist ebenfalls ein Verfahren zur Herstellung des Gipsschaumstoffes, das dadurch gekennzeichnet ist, daß Gips mit Wasser angefeuchtet wird, zu dem erhaltenen Brei Diphenylmethan-4,4'-diisocyanat-Präpolymeres und ein Netzmittel zugegeben werden, das Gemisch gründlich vermengt, in die gewünschte Form gebracht und gehärtet wird.

Die Erfindung betrifft weiterhin die Verwendung des Gipsschaumstoffs als Schalldämmstoff und/oder Wärmedämmstoff.

Als Gips können bei der vorliegenden Erfindung alle neutral oder schwach sauer reagierenden, hydraulisch abbindenden Calciumsulfat-Modifikationen in der üblichen pulverigen Kornfeinheit eingesetzt werden. Vorzugsweise werden handelsübliche Gipsqualitäten mit einem Wasser-Gips-Faktor von 0,3 eingesetzt. Es ist besonders bevorzugt, α-Gips oder REA-Gips zu verwenden. REA-Gips stammt aus Rauchgas-Entschwefelungsanlagen. REA-Gipse sind feuchte Dihydrate, die jedoch, abhängig von der Menge, auch als Semihydrate abgegeben werden können.

Erfindungsgemäß wird der Gips mit Diphenylmethan-4,4'-diisocyanat-Präpolymeren vermischt. Das Diphenylmethan-4,4'-diisocyanat-Präpolymere hat den besonderen Vorteil, lösungsmittelfrei zu sein, als Präpolymer einen gleichbleibenden NCO-Gehalt zu bieten und eine monomere Menge von unter 0,5% aufzuweisen. Es ist bevorzugt, ein Produkt zu verwenden, welches einen NCO-Gehalt im Bereich von 12 bis 20 Gew.-%, bevorzugt 14 bis 18 Gew.-%, und besonders bevorzugt 16 Gew.-% besitzt. Solche Produkte sind im Handel erhältlich. Die Produkte besitzen eine Viskosität bei 20°C von 10.000 mPa/s ± 2.000.

Das Diisocyanat-Präpolymere reagiert mit dem Wasser, welches zum Anmachen des Gipses verwendet wird, und dem Kristallwasser des Gipses in an sich bekannter Weise unter Bildung eines Carbamidsäurederivats, welches unter Abspaltung von Kohlendioxid in ein primäres Amin übergeht. Das primäre Amin reagiert mit dem Isocyanat zu einem Harnstoffderivat bzw. Ureid, welches gegebenenfalls weiter reagieren kann. In der vorliegenden Anmeldung soll der Ausdruck "Polyharnstoff" die entstehenden Kondensationsprodukte aus Diphenylmethan-4,4'-diisocyanat-Präpolymeren und Wasser umfassen. Der erfindungsgemäße Gipsschaumstoff besitzt ein spezifisches Gewicht im Bereich von 0,1 bis 0,4 g/cm³, bevorzugt von 0,15 bis 0,35 g/cm³, besonders bevorzugt von 0,2 bis 0,3 g/cm³. Er ist offenzellig und enthält mindestens 80% Zellen mit einer Größe von 0,3 bis 2 mm. Es ist bevorzugt, daß in dem erfindungsgemäßen Gipsschaumstoff soviel Zellen wie möglich mit einer Größe von 0,8 bis 1,2 mm vorliegen. Die Einstellung des spezifischen Gewichts erfolgt durch die Menge an verwendeten Diphenylmethan-4,4'-diisocyanat-Präpolymeren. Je größer diese Menge ist, um so geringer wird das spezifische Gewicht, und der Fachmann kann anhand einfacher Vorversuche feststellen, welche Mengen er an Diisocyanat-Präpolymeren benötigt, um einen Gipsschaumstoff mit einem bestimmten spezifischen Gewicht herzustellen.

Der erfindungsgemäße Gipsschaumstoff enthält 55 bis 90 Gew.-% Gips und 45 bis 10 Gew.-% Polyharnstoff sowie 0,1 bis 2,0 Gew.-% Netzmittel. Es ist nicht erforderlich, daß der erfindungsgemäße Gipsschaumstoff andere Zusatzstoffe enthält, jedoch kann er gegebenenfalls übliche Zusatzstoffe in einer Menge von 0,1 bis 2 Gew.-%, bezogen auf das Trockengewicht von Gips, Polyharnstoff und Netzmittel enthalten.

Zur Herstellung des erfindungsgemäßen Gipsschaumstoffes wird der Gips, vorzugsweise der α-Gips, mit Wasser angefeuchtet, zu dem erhaltenen Brei wird Diphenylmethan-4,4'-diisocyanat-Präpolymeres und ein Netzmittel zugegeben. Das Gemisch wird gründlich vermengt. Das Gemisch besitzt eine Startzeit von 10 bis 15 Minuten. Es wird dann nach dem Vermengen in die gewünschte Form gebracht und aushärten gelassen. Die Aushärtung erfolgt bei Raumtemperatur während einer Zeit von 30 Minuten bis 2 Stunden. Nach der Aushärtung kann das Material aus der Form entnommen werden. Die Nachhärtung, die in oder außerhalb der Form stattfinden kann, ist im allgemeinen in einer Zeit von 8 bis 12 Stunden abgeschlossen.

Erfindungsgemäß werden 50 bis 70 Gew.-%, vorzugsweise 55 bis 66 Gew.-%, Gips, 10 bis 25 Gew.-%, vorzugsweise 15 bis 25 Gew.-%, Wasser und 10 bis 30 Gew.-%, vorzugsweise 15 bis 25 Gew.-%, Diphenylmethan-4,4'-diisocyanat-Präpolymeres und 0,1 bis 2,0 Gew.-%, vorzugsweise 0,1 bis 1 Gew.-%, Netzmittel miteinander vermischt.

Als Netzmittel können erfindungsgemäß an sich bekannte Netzmittel, d.h. Handelsprodukte wie Fettalkoholsulfonate, quaternäre Ammoniumverbindungen und auch andere kationische, nichtionische und anionische Mittel, eingesetzt werden. Spezifische Beispiele für Netzmittel sind ein Ethylenoxid-/Propylenoxid-Polyglykol, ein Betainsiloxan-Tensid, ein niedermolekulares Acryl-Copolymer und ein Alkylphenoloxethylat. Dieses ist bevorzugt. Die Netzmittel beeinflussen die Durchhärtung und die Elastifizierung. Sie werden in Mengen von 0,1 bis 2,0 Gew.-%, vorzugsweise in Mengen von 0,5 bis 1,0 Gew.-%, besonders bevorzugt in einer Menge von 0,5 Gew.-%, verwendet. Sie werden zur Regelung der Porengröße eingesetzt. Je höher der Netzmittelanteil ist, um so kleiner werden die Poren.

Der erfindungsgemäße Gipsschaumstoff wird als Schalldämmstoff und/oder Wärmedämmstoff verwendet. In einer bevorzugten erfindungsgemäßen Ausführungsform wird der erzeugte Gipsbrei in besondere Formen gegeben und dort geschäumt, so daß man speziell geformte Bauelemente erhält. Es ist besonders bevorzugt, den erfindungsgemäßen Gipsschaumstoff in vorgefertigte Raumgliederungssysteme einzuarbeiten oder ihn als Akustikdecken oder Akustikwandbauteile (auch unter Blendmauerwerk oder Wandabdeckung) zu verwenden. Man kann auch Platten, Rohre und Elemente verschiedener Geometrie herstellen. Der erfindungsgemäße Gipsschaumstoff ist dübelbar, nagelbar und verklebbar. Eine mechanische Nachbearbeitung ist durch Schneiden, Sägen und Fräsen und Bürsten möglich.

Dies ist insbesondere bei der Anwendung des Gipsschaumstoffes als schallabsorbierendes Material erforderlich. Da der Gipsschaum nach Abschluß des Schäumvorganges eine geschlossene Haut besitzt, muß die Oberfläche zum Öffnen der Poren abgeschält werden. Dies kann gemäß den oben erwähnten mechanischen Nachbearbeitungsverfahren erfolgen. Man kann auch mehrere dieser Nachbearbeitungsverfahren an dem gleichen Werkstück durchführen. Beispielsweise kann man bei Platten die Oberfläche durch Bürsten aufrauhen und die Seiten schneiden.

Das bei der mechanischen Nachbearbeitung anfallende Material kann wiederverwendet werden. Wenn es stückig anfällt, kann es zerkleinert und anschließend zermahlen werden. Das pulverförmige Material wird dann dem Ausgangsgemisch aus Diphenylmethan-4,4'-diisocyanat-Präpolymeren, dem Gips und Wasser und dem Netzmittel zugemengt. Dem Ausgangsgemisch können auch, bezogen auf das Gemisch, 5 bis 15 Gew.-%, vorzugsweise 8 bis 12 Gew.-%, besonders bevorzugt 10 Gew.-%, Abfallpulver beigemengt werden.

Das Material kann auch in Folien verkleidet oder mit Folien abgedeckt verwendet werden. Damit wird die mechanische Belastbarkeit erhöht und es kann der Wasserdampfdiffusionswiderstand geregelt werden (Dampfsperre). Bei geeigneter Wahl der Folienstärke werden die akustischen Eigenschaften nicht beeinträchtigt, es kann auch in Form von Sandwich-Platten verwendet werden. Das erfindungsgemäße Verfahren kann diskontinuierlich oder kontinuierlich durchgeführt werden. Bei der diskontinuierlichen Durchführung wird der erhaltene Gipsbrei in Formen gegossen, beispielsweise in Kastenformen. Zur Herstellung von Sandwich-Platten kann man in die Kastenform Boden- oder Deckplatten einlegen. Bei dem kontinuierlichen Verfahren kann man beispielsweise auf ein als Form ausgebildetes Band kontinuierlich Gipsbrei geben und das Band anschließend mit einer Abdeckplatte versehen. Dadurch werden Endlosplatten erhalten, die zu den gewünschten Formen und Abmessungen geschnitten oder gesägt werden können.

Der erfindungsgemäß hergestellte Gips besitzt die folgenden Vorteile:
(a) Der erfindungsgemäße Gipsschaumstoff besitzt eine sehr gute Schallabsorption. Der Schallabsorptionsgrad für senkrechten Schalleinfall (Messung nach DIN 52 215) für einen 38 mm dicken Probekörper ist in Tabelle 1 für verschiedene Frequenzen eingetragen. Zum Vergleich sind die Meßergebnisse für eine gleich dicke Glaswolleprobe mit angegeben.

**TABELLE 1**

| Frequenz | Schallabsorptionsgrad α | |
|---|---|---|
| | Gipsschaum | Glaswolle |
| 100 Hz | 0,18 | 0,14 |
| 200 Hz | 0,20 | 0,21 |
| 400 Hz | 0,49 | 0,46 |
| 800 Hz | 0,77 | 0,76 |
| 1600 Hz | 0,57 | 0,91 |
| 3200 Hz | 0,65 | 0,89 |

(b) Er besitzt eine vorzügliche Wärmedämmung. Der λ-Wert betrug 0,045 W/mK. Polystyrolschäume und Mineralwollen besitzen eine Wärmeleitfähigkeit von λ = 0,035 W/mK bis 0,05 W/mK. Das erfindungsgemäße Material besitzt somit extrem gute Werte.
(c) Gegenüber den bekannten Baustoffen besitzt er ein wesentlich niedrigeres spezifisches Gewicht. Die bekannten Gipsschäume besitzen ein spezifisches Gewicht von 0,6 bis 0,7 g/cm³. Der erfindungsgemäße Gipsschaumstoff kann daher leichter gehandhabt, insbesondere verarbeitet und transportiert werden, was bei seiner praktischen Verwendung von großer Bedeutung ist.
(d) Der erfindungsgemäße Gipsschaumstoff ist dübelbar, nagelbar oder verklebbar, eine mechanische Nachbearbeitung ist durch Schneiden, Sägen, Fräsen und Bürsten möglich.

Das erfindungsgemäße Verfahren besitzt die folgenden Vorteile:
(a) Es ist nicht erforderlich, außer Gips, dem Isocyanat und dem Netzmittel andere Zusatzstoffe zu verwenden, insbesondere müssen keine Metalle verwendet werden. Dadurch findet keine Umweltbelastung statt.
(b) Bei dem erfindungsgemäßen Verfahren ist die Zugabe eines Gipsverflüssigers nicht erforderlich. Dadurch kann man bei dem erfindungsgemäßen Verfahren mit einer höheren Viskosität des Gips-Wasser-Breis arbeiten, wodurch ein Auslaufen aus den Lunkern und aus der Form vermieden werden kann.
(c) Die Startzeit beträgt bei dem erfindungsgemäßen Verfahren mindestens 10 Minuten, meistens 15 Minuten. Dies ermöglicht dem Verarbeiter, eine gründliche Durchmischung vorzunehmen, die Mischung in die vorgesehenen Formen einzufüllen, ohne daß Gefahr einer vorzeitigen Härtung besteht.
(d) Es ist nicht erforderlich, einen Schäumungsbeschleuniger einzusetzen. Als Schäumungsbeschleuniger wurden bei den bekannten Verfahren Metallverbindungen eingesetzt, die, wie oben erläutert wurde, physiologisch bedenklich sind.
(e) Gegenüber den bekannten Verfahren ist es nicht erforderlich, das Anmachwasser vorzuerwärmen. Dies bedeutet, daß auch kleinere Firmen und Betriebe nach dem erfindungsgemäßen Verfahren auf einfache Weise arbeiten können, ohne daß sie komplizierte Einrichtungen in ihrem Betrieb haben müssen.
(f) Bei dem erfindungsgemäßen Verfahren ist es nicht erforderlich, wie bei dem aus der DE-25 46 181-B2 bekannten Verfahren, andere Verschäumungsmittel, wie beispielsweise Fluorchlorkohlenwasserstoffe, zu verwenden. Die Verwendung von Fluorchlorkohlenwasserstoffen ist umweltschädlich.
(g) Mit dem erfindungsgemäßen Verfahren ist es möglich, den im Überschuß anfallenden REA-Gips auf sinnvolle Weise zu entsorgen und zur Herstellung von nützlichen Baumaterialien verwenden zu können.
(h) Das erfindungsgemäße Verfahren arbeitet sehr kostengünstig, da weder teure Vorrichtungen noch viel Energie noch viele Arbeitskräfte erforderlich sind.

Die folgenden Beispiele erläutern die Erfindung.

### Beispiel 1

66,5 Gew.-Teile α-Gips werden mit 16,5 Gew.-Teilen Wasser angefeuchtet. Zu dem Gipsbrei werden 16,5 Gew.-Teile Diphenylmethan-4,4'-diisocyanat-Präpolymeres, löserfrei, mit einem NCO-Gehalt von 16 Gew.-% und 0,5 Gew.-% eines nichtionogenen Alkylphenoloxethylats als Netzmittel zugegeben.

Das gesamte Gemisch wird gründlich vermengt und in die gewünschte Form gebracht.

Die Reaktion beginnt nach etwa 10 bis 12 Minuten und ist in etwa 1 Stunde abgeschlossen. Das erhaltene Produkt ist eine Platte mit guter Oberflächenhärte.

### Beispiel 2

65 Gew.-Teile α-Gips werden mit 21,5 Gew.-Teilen Wasser und 0,4 Gew.-Teilen Netzmittel, ein im Handel erhältliches Alkylphenoloxethylat, sowie 13,1 Gew.-Teilen Diphenylmethan-4,4'-diisocyanat-Präpolymeren, löserfrei, mit einem NCO-Gehalt von 16 Gew.-% vermischt.

Das gesamte Gemisch wird gründlich vermengt und in die gewünschte Form gebracht.

Die Reaktion beginnt nach 10 bis 12 Minuten und ist in etwa 1 Stunde abgeschlossen. Das erhaltene Produkt ist eine Platte mit guter Oberflächenhärte.

### Beispiel 3

Man arbeitet wie in Beispiel 1 beschrieben und verwendet die folgenden Bestandteile:
59,4 Gew.-% α-Gips
15,0 Gew.-% Wasser
16,0 Gew.-% Diphenylmethan-4,4'-diisocyanat-Präpolymeres mit einem NCO-Gehalt von 16 Gew.-%
0,4 Gew.-% kationenaktives Fettaminsalz als Netzmittel
9,0 Gew.-% ausreagierten Restgips.

Nach dem Vermengen wird das gesamte Gemisch in eine Kastenform gegeben. Die Reaktion beginnt nach etwa 10 Minuten und ist in etwa 1 Stunde abgeschlossen.

### Beispiel 4

60 Gew.-Teile α-Gips werden mit 20 Gew.-Teilen Wasser sowie 0,5 Gew.-Teilen Netzmittel, ein im Handel erhältliches Alkylphenoloxethylat, und 16 Gew.-Teilen Diphenylmethan-4,4'-diisocyanat-Präpolymeren mit einem NCO-Gehalt von 16 Gew.-% und 4 Gew.-Teilen ausreagiertem Gipsschaumstoff, erhalten gemäß Beispiel 3, in pulverisierter Form vermischt.

Nach dem Vermengen wird das gesamte Gemisch in eine Kastenform gegeben. Die Reaktion beginnt nach etwa 10 Minuten und ist in etwa 1 Stunde abgeschlossen.

Die gemäß den Beispielen 1, 2, 3 und 4 hergestellten Platten und Teile sind durch Schneiden und Sägen behandelbar. Die beim Herstellen entstehenden, an der Oberfläche sich bildenden Häute können durch Fräsen entfernt werden, wodurch die schalldämmenden Eigenschaften beeinflußt werden. Ein Bespannen mit verschiedenen Stoffqualitäten ermöglicht eine spezielle Beeinflussung der frequenzabhängigen Absorptionseigenschaften. Die Teile sind nagelbar und dübelbar.

## Patentansprüche

1. Gipsschaumstoff mit poriger Struktur, enthaltend einen aus Polyisocyanaten entstandenen Polyharnstoff und ein Netzmittel, dadurch **gekennzeichnet,** daß er ein spezifisches Gewicht im Bereich von 0,1 bis 0,4 g/cm³ besitzt, offenzellig ist und als Polyharnstoff das Kondensationsprodukt aus Diphenylmethan-4,4'-diisocyanat-Präpolymeren und Wasser enthält und durch Anfeuchtung von Gips mit Wasser und Umsetzung des Gipsbreis mit Diphenylmethan-4,4'-diisocyanat-Präpolymeren in Anwesenheit eines Netzmittels hergestellt worden ist.

2. Gipsschaumstoff nach Anspruch 1, dadurch **gekennzeichnet,** daß mindestens 80% der Zellen eine Größe von 0,3 bis 2 mm besitzen.

3. Gipsschaumstoff nach Anspruch 1 oder 2, dadurch **gekennzeichnet,** daß er
55 bis 90 Gew.-% Gips,
45 bis 10 Gew.-% Polyharnstoff,
0,1 bis 2,0 Gew.-% Netzmittel
sowie gegebenenfalls 0,1 bis 2 Gew.-% andere übliche Zusatzstoffe, bezogen auf das Trockengewicht von Gips, Polyharnstoff und Netzmittel,
enthält.

4. Verfahren zur Herstellung eines Gipsschaumstoffes nach mindestens einem der Ansprüche 1 bis 3, dadurch **gekennzeichnet,** daß Gips mit Wasser angefeuchtet wird, zu dem erhaltenen Brei Diphenylmethan-4,4'-diisocyanat-Präpolymeres und ein Netzmittel zugegeben werden, das Gemisch gründlich vermengt, in die gewünschte Form gebracht und gehärtet wird.

5. Verfahren nach Anspruch 4, dadurch **gekennzeichnet,** daß die Oberfläche des erhaltenen Produkts zur Öffnung der Poren einer Schneid-, Säg-, Fräs- oder Bürstenbehandlung oder mehreren dieser Behandlungen unterworfen wird.

6. Verfahren nach Anspruch 4 oder 5, dadurch **gekennzeichnet,** daß 50 bis 70 Gew.-% Gips, 10 bis 25 Gew.-% Wasser, 10 bis 30 Gew.-% Diphenylmethan-4,4'-diisocyanat-Präpolymeres und 0,1 bis 2 Gew.-% Netzmittel miteinander vermischt werden, wobei die Gew.-% auf das Gesamtgemisch bezogen sind.

7. Verfahren nach mindestens einem der Ansprüche 4 bis 6, dadurch **gekennzeichnet,** daß das abgeschnittene, abgesägte, abgefräste oder abgebürstete Material gegebenenfalls nach Zerkleinern und/oder Zermahlen dem Gemisch aus Gips, Wasser, Diphenylmethan-4,4'-diisocyanat-Präpolymeren und Netzmittel in einer Menge von 5 bis 15 Gew.-%, bezogen auf das Gewicht des Gemisches, beigemengt wird.

8. Verfahren nach mindestens einem der Ansprüche 4 bis 7, dadurch **gekennzeichnet,** daß man ein Diphenylmethan-4,4'-diisocyanat-Präpolymeres mit einem NCO-Gehalt im Bereich von 12 bis 20 Gew.-% einsetzt.

9. Verfahren nach mindestens einem der Ansprüche 4 bis 8, dadurch **gekennzeichnet,** daß man als Gips α-Gips einsetzt.

10. Verfahren nach mindestens einem der Ansprüche 4 bis 9, dadurch **gekennzeichnet,** daß die Aushärtung bei Raumtemperatur und bei Normaldruck durchgeführt wird.

11. Verfahren nach mindestens einem der Ansprüche 4 bis 10, dadurch **gekennzeichnet,** daß als Netzmittel ein handelsübliches Alkylphenoloxethylat eingesetzt wird.

12. Verwendung des Gipsschaumstoffes nach mindestens einem der Ansprüche 1 bis 3 als Schalldämmstoff und/oder Wärmedämmstoff.

13. Verwendung nach Anspruch 12 in vorgefertigten Raumgliederungssystemen und Akustikdecken.

## Claims

1. Cellular gypsum with a porous structure, containing a polycarbamide derived from polyisocyanates and a wetting agent, characterised in that it has a specific weight in the range of 0.1 to 0.4 g/cm³, has an open-cell structure and contains as polycarbamide the condensation product of diphenylmethane-4, 4'-diisocyanate prepolymer and water, and has been manufactured by the wetting of gypsum with water and conversion of the thin plaster mixture with diphenylmethane-4, 4'-diisocyanate prepolymers in the presence of a wetting agent.

2. Cellular gypsum according to claim 1, characterised in that at least 80 % of the cells have a size of 0.3 to 2 mm.

3. Cellular gypsum according to claim 1 or 2, characterised in that it contains
55 to 90 % by weight gypsum
45 to 10 % by weight polycarbamide,
0.1 to 2.0 % by weight wetting agent and optionally 0.1 to 2 % by weight other conventional additives, in terms of the dry weight of the gypsum, polycarbamide and wetting agent.

4. Process for manufacturing a cellular gypsum, according to at least one of claims 1 to 3, characterised in that gypsum is wetted with water, diphenylmethane-4, 4'-diisocyanate prepolymer and a wetting agent are added to the thin plaster obtained, the mixture is thoroughly combined, and is then made into the desired shape and hardened.

5. Process according to claim 4, characterised in that the surface of the product obtained is subjected to cutting, sawing, milling or brushing treatment or a plurality of these treatments in order to open the pores.

6. Process according to claim 4 or 5, characterised in that 50 to 70 % by weight gypsum, 10 to 25 % by weight water, 10 to 30 % by weight diphenylmethane-4, 4'-diisocyanate prepolymer, and 0.1 to 2 % by weight wetting agent are mixed together, the percentages by weight being relative to the total mixture.

7. Process according to at least one of claims 4 to 6, characterised in that after being comminuted and/or ground, the cut-up, sawn-up, milled or brushed material is optionally mixed with the mixture of gypsum, water, diphenylmethane-4, 4'-diisocyanate prepolymer and wetting agent in a quantity of 5 to 15 % by weight relative to the weight of the mixture.

8. Process according to at least one of claims 4 to 7, characterised in that a diphenylmethane-4, 4'-diisocyanate prepolymer with a NCO content in the range of 12 to 20 % by weight is used.

9. Process according to at least one of claims 4 to 8, characterised in that, as gypsum, α-gypsum is used.

10. Process according to at least one of claims 4 to 9, characterised in that hardening is carried out at room temperature and at normal pressure.

11. Process according to at least one of claims 4 to 10, characterised in that as a wetting agent a standard commercial alkylphenoloxethylate is used.

12. Use of the cellular gypsum according to at least one of claims 1 to 3 as an acoustic and/or thermal insulation material.

13. Use according to claim 12 in prefabricated room dividing systems and acoustic ceilings.

## Revendications

1. Plâtre alvéolaire à structure poreuse, contenant un polycarbamide formé de polyisocyanates et un agent mouillant, caractérisé en ce qu'il a un poids spécifique compris entre 0,1 et 0,4 g/cm³, des alvéoles ouverts, et contient, comme polycarbamide, le produit de condensation d'un prépolymère de diphénylméthane-4,4'-diisocyanate et d'eau, et qu'on le prépare par humidification de gypse avec de l'eau et mise en réaction de la pâte de plâtre avec un prépolymère de diphénylméthane-4,4'-diisocyanate en présence d'un agent mouillant.

2. Plâtre alvéolaire selon la revendication 1, caractérisé en ce qu'au moins 80 % des alvéoles ont une dimension comprise entre 0,3 et 2 mm.

3. Plâtre alvéolaire selon la revendication 1 ou 2, caractérisé en ce qu'il contient :
55 à 90 % en poids de gypse,
45 à 10 % en poids de polycarbamide,
0,1 à 2,0 % en poids d'agent mouillant,
ainsi qu'éventuellement 0,1 à 2 % en poids d'autres additifs usuels, par rapport au poids à sec du gypse, du polycarbamide et de l'agent mouillant.

4. Procédé de préparation d'un plâtre alvéolaire selon au moins une des revendications 1 à 3, caractérisé en ce qu'on humidifie le gypse avec de l'eau, on ajoute à la pâte obtenue un prépolymère de diphénylméthane-4,4'-diisocyanate et un agent mouillant, on mélange intimement le mélange, on lui donne la forme souhaitée et on le fait durcir.

5. Procédé selon la revendication 4, caractérisé en ce que, pour ouvrir les pores, on soumet la surface du produit obtenu à une opération de coupe, de sciage, de fraisage ou de brossage, ou plusieurs de ces opérations.

6. Procédé selon la revendication 4 ou 5, caractérisé en ce qu'on mélange ensemble 50 à 70 % en poids de gypse, 10 à 25 % en poids d'eau, 10 à 30 % en poids de prépolymère de diphénylméthane-4,4'-diisocyanate et 0,1 à 2 % en poids d'agent mouillant, ces % en poids étant rapportés à l'ensemble du mélange.

7. Procédé selon au moins une des revendications 4 à 6, caractérisé en ce qu'on ajoute le matériau coupé, scié, fraisé ou brossé, éventuellement après l'avoir broyé et/ou pulvérisé, au mélange de gypse, d'eau, de prépolymère de diphénylméthane-4,4'-diisocyanate et d'agent mouillant, en une quantité valant de 5 à 15 % en poids, par rapport au poids du mélange.

8. Procédé selon au moins une des revendications 4 à 7, caractérisé en ce qu'on utilise un prépolymère de diphénylméthane-4,4'-diisocyanate ayant une teneur en NCO comprise entre 12 et 20 % en poids.

9. Procédé selon au moins une des revendications 4 à 8, caractérisé en ce qu'on utilise, comme gypse, du gypse α.

10. Procédé selon au moins une des revendications 4 à 9, caractérisé en ce qu'on effectue le durcissement à la température ambiante et à la pression atmosphérique.

11. Procédé selon au moins une des revendications 4 à 10, caractérisé en ce qu'on utilise, comme agent mouillant, un oxéthylate d'alkylphénol du type commercial.

12. Utilisation du plâtre alvéolaire selon au moins une des revendications 1 à 3 comme matériau antibruit et/ou matériau calorifuge.

13. Utilisation selon la revendication 12 dans des systèmes préfabriqués de cloisonnement des pièces et de plafonds acoustiques.
